# EUROPEAN PATENT SPECIFICATION

(11) **EP 0 575 037 B1**
(45) Date of publication and mention of the grant of the patent: **15.09.1999**
(21) Application number: 93303071.0
(22) Date of filing: 20.04.1993
(51) Int. Cl.: F16D 41/07

(54) **One-way spray clutch**
Klemmkörpereinwegkupplung
Embrayage uni-directionnel à béquilles

(30) Priority: 18.06.1992 US 900885; 01.02.1993 US 11534
(43) Date of publication of application: 22.12.1993
(73) Proprietor: Borg-Warner Automotive Morse Tec Corporation, Sterling Heights, Michigan 48311-8022 (US)
(72) Inventor: Rutke, Russell J., Palos Hgts, Illinois 60463 (US); Malecha, Gregory J., Naperville, Illinois 60540 (US)
(74) Representative: Lerwill, John

(56) References cited:
- DE-A- 2 027 763
- DE-B- 2 557 539
- FR-A- 2 246 772
- FR-A- 2 273 193
- GB-A- 1 114 300
- US-A- 4 998 605

## Description

This invention relates to one-way sprag clutches having tiltable sprags disposed between concentric races for controlling torque delivery in a torque flow path between a driving member and a driven member.

Conventional sprag type clutches, referred to as double cage clutches, contain two concentric metal or plastic rings, each called cages, which function to provide positioning and simultaneous actuation of each sprag. This is accomplished by designing circumferential, radial, and axial features in both cages.

While the double cage clutch is an excellent performing one way clutch system, it is inherently a complex assembly. The sprags of the double cage clutch require extensive design considerations and manufacturing control to meet the application performance requirements.

Double cage clutches, such as those disclosed in JP-U-63-48035; JP-A-63-180731; and JP-A-1-120440, use two cage members to space inner and outer sections of each sprag between the clutch races. A resilient ring member is located between the two cage members. The resilient ring member also includes tabs and functions to urge the sprags into a specific angle of engagement with the races.

The tabs of the resilient sprag retainer or member have an inherent interdependency that can adversely affect the function of the clutch. Nonuniformity of the resilient member about its periphery can result in an uneven loading against the independent sprags and inefficiency in the clutch operation.

Furthermore, such clutch assemblies often require hand assembly, which is inefficient in high volume manufacturing operations.

Other one-way sprag-type clutches, such as the clutch disclosed in US-A-2 824 635, include a series of tiltable sprags disposed between a pair of concentric clutch races. A cage or retainer for spacing the sprags usually is formed as one continuous resilient ring. Such a sprag retainer functions to space the sprags and to urge the sprags into engagement with the races. A series of radial openings or windows is blanked into the ring and a tang or tab usually is formed on one side of each window. These tangs or tabs provide a circumferential spring force that acts on the sprags. This design fails to provide adequate sprag position control.

Other clutches, such as those disclosed in JP-U-63-112631, include rotationally loaded sprags. Such structures are complicated, costly, and not easily machine assembled.

A further example of the prior art is featured in DE-A-2027763 which discloses the features of the preamble of claim 1, and which generally discloses a one-way sprag clutch comprising concentric inner and outer races and a sprag cage structure located between the races; the sprag cage structure comprising an annular cage having axially extending circumferentially spaced cam members which define therebetween circumferentially spaced windows, tiltable sprags located one in each window, each sprag having a radially inner clutch surface and a radially outer clutch surface engageable respectively with the inner and outer races, the sprags each having a circumferential width at a location intermediate the inner and outer clutch surfaces thereof less than its circumferential width at locations adjacent the clutch surfaces, cam surfaces on the cam members on opposed sides of each of the sprags, the sprags being engageable with the cam surfaces at the sprag locations adjacent the inner and outer clutch surfaces when the sprags are tilted to a limiting angular position, and an energizing spring for each of the sprags secured to a respective cam member and adapted to engage an adjacent sprag at its intermediate location thereby to impart a continuous moment on the sprag to maintain the clutch surfaces thereof in contact with the races.

More particularly, in that one-way sprag clutch, the cam surfaces on the cam members on opposite sides of each of the sprags define therebetween the circumferential windows, and the oppositely facing cam surfaces have portions converging in a radially outwardly direction from the radially inward region of the respective window and then extending generally parallel with one another in the same radially outward direction to the radially outward region of that window, by which the window is of asymmetrical funnel shape in radial planes normal to the axis of the clutch with its radially inward region wider in a circumferential direction than its radially outward region. By that design, the cam members at their radially outer ends have a wide circumferential width and the window has a relatively narrow circumferential width at its radially outward region.

The described configuration of the windows of the one-way sprag clutch of DE-A-2027763 has the disadvantage that the cam surfaces only operate on the sprags when the sprags are at their extreme angular positions, giving rise to the problem that the midsections of the various sprags can splay about in any direction and the individual sprags are not uniformly operated.

In accordance with the present invention as claimed, the aforesaid generally disclosed one-way sprag clutch is characterized in that each window has a generally hour-glass shape in the radial direction of the cage with the radially outward region of the window and the radially inward region of the window both being wider in a circumferential direction than the radially intermediate region of the window, adjacent cam members being engageable, at the radially intermediate region of the window defined therebetween, with the intermediate relatively narrow location of the sprag located in that window, adjacent cam members each including a pair of said cam surfaces, one such cam surface of one cam member lying circumferentially opposite one such cam surface of the adjacent cam member, those circumferentially opposed cam surfaces continuously converging in a radially outward direction from the radially inward region of the window to the radially intermediate region thereof, the other such cam surface of said one cam member lying circumferentially opposite the other such cam surface of said adjacent cam member, those circumferentially opposed cam surfaces continuously diverging in a radially outward region of the window, the cam surfaces of each cam member intersecting with one another at said intermediate region of the window.

The one-way sprag clutch of the invention has the advantage that circumferential translation of the sprag is prevented as it tilts about its intermediate location, the cam surfaces fully support the sprags during all phases of clutch operation so that the sprags are uniformly operated, and the hour-glass window configuration permits maximum sprag rotation giving a wider range of operation.

In a preferred embodiment each spring element has a mounting portion and a tang portion. The mounting portion is received in an opening of the cage. The springs bias the individual sprags by spring force into wedging engagement with the clutch races. The mounting portion attaches the spring element to the cage and the tang portion extends generally circumferentially. Each cam member can be made of resilient or metallic materials.

In order that the invention may be well understood, there will now be described some embodiments thereof, given by way of example, reference being made to the accompanying drawings, in which:-
Figure 1 is a perspective view of an improved cage and sprag structure constructed in accordance with the present invention;
Figures 2-5 are sectional perspective views of the cage and a sprag structure illustrating various independent energizing elements mounted on the cage for independently urging adjacent sprags;
Figure 6 is a perspective view of an alternative embodiment of the improved cage and sprag structure illustrating elastomeric energizing elements;
Figure 7 is a partial sectional view of a prior art single cage and sprag structure;
Figure 8 is a partial sectional view of a prior art double cage and sprag structure illustrated in a freewheel position of the cage and sprags;
Figure 9 is a partial sectional view of the prior art double cage and sprag structure illustrated in an engaged position of the sprags;
Figure 10 is a partial sectional view of a combined cage of the present invention including cam members and illustrating sprags in a freewheel position;
Figure 11 is a partial sectional view of the combined cage illustrating the sprags in an engaged position;
Figure 12 is a partial sectional view of the combined cage illustrating the arrangement of adjacent cam surfaces;
Figure 13 is a perspective view of the combined cage and sprag structure of the present invention;
Figure 14 is an enlarged partial sectional perspective view of a cam member and sprag in the combined cage embodiment illustrating an energizing element of a C-clip type spring configuration mounted on the cam member for biasing the sprag;
Figure 15 is an enlarged partial sectional perspective view like that of Figure 14 illustrating an energizing element of an elastomeric construction mounted on the cam member for biasing the sprag;
Figure 16 is an enlarged partial sectional perspective view like that of Figure 14 illustrating an energizing element of a Z-spring construction mounted on the cam member for biasing the sprag;
Figure 17 is an exploded perspective view of a two piece cage construction that facilitates cage, sprag and energizing spring element assembly; and
Figure 18 is an enlarged sectional view of the two piece cage of Figure 17 illustrating snap or weld together assembly of the two cage pieces.

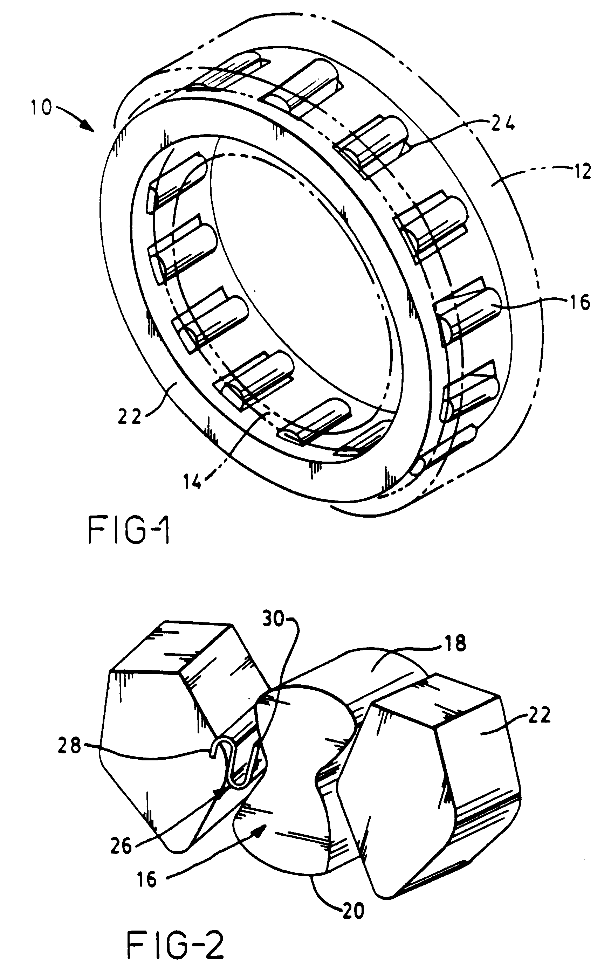

Referring to Figure 1 of the drawings, an improved cage and sprag structure for a one-way clutch constructed in accordance with the present invention is generally indicated by reference numeral 10. It is used to rapidly transmit torque between rotating members. As hereinafter more fully described, the cage and sprag structure provides improved performance. Such an improved cage and sprag structure 10 also lends itself to higher levels of automated assembly.

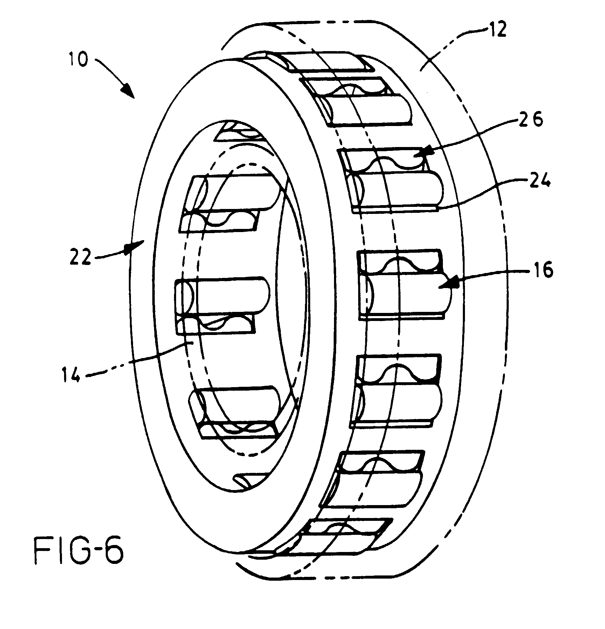

As shown in Figures 1 and 6, the improved cage and sprag structure 10 is placed between an outer race 12 and an inner race 14, shown in phantom. The races are substantially cylindrical and concentrically mounted. Each race is adapted to be respectively connected with an associated rotatable member (not shown). A plurality of torque engagement members or sprags 16 is disposed between the races 12,14, each sprag being provided with a pair of eccentric wedging surfaces 18,20 for wedging against the inner and outer races 12,14, respectively, as it is tilted into engagement with the races.

A cage 22, illustrated in Figures 1-6, is adapted to be installed between the races 12,14. Cage 22 retains and spaces the sprags 16 peripherally between the races. Cage 22 has a ring shape and has a series of openings or windows 24 spaced around its periphery for receiving the tiltable sprags 16. Cage 22 also includes independent energizing elements 26, best seen in Figures 2-5, that are retained in the openings 24.

These energizing elements 26 are formed from metal or composite materials as individual components. Each energizing element 26 includes a mounting portion 28 and a tang portion 30. The mounting portion 28 attaches the element 26 to the cage and the tang portion 30 circumferentially extends within an opening 24. Each element 26 thereby acts independently upon an individual sprag 16 received in an opening 24.

Precise forming of each individual energizing element 26 contributes to the overall performance in the assembly of the one-way clutch. Such elements 26 provide and maintain a more uniform individual loading against the sprags 16 than the loading that would result from energizing springs on a resilient spring or band-type spring of conventional design.

Although the objects of the improved cage and sprag structure can be accomplished with metallic assemblies using such materials as steel, aluminum or bronze, it is preferable for the cage 22 to be comprised of high temperature, engineered plastics such as polyetherimides or nylons or PES polyethersulfones. Such engineered plastics can be reinforced with reinforcing materials such as carbon fibers or glass or clay or mica to increase the overall mechanical characteristics of the plastics.

Figures 2-6 illustrate various embodiments of the improved cage and sprag structure 10. Figure 2 illustrates the use of a metallic energizing element 26 having a mounting portion 28 and tang portion 30 circumferentially extending within the opening 24 of the cage 22. As illustrated, the cage 22 has a rectangular cross-section, which lends greater support to the sprags 16.

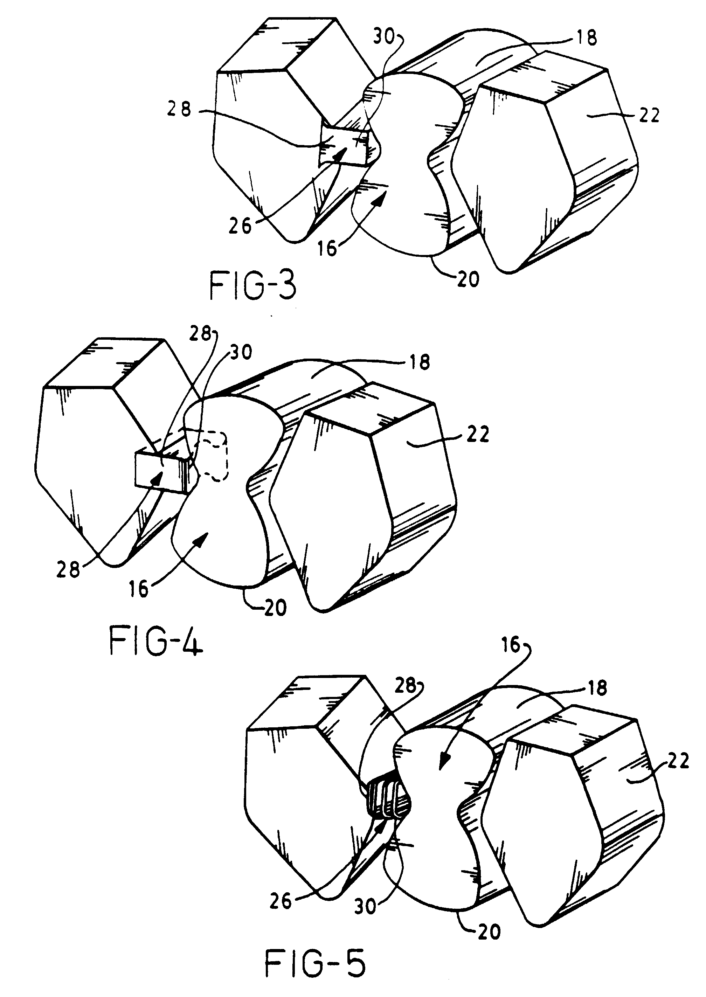

Figures 3, 4 and 6 illustrate energizing elements 26 comprised of high temperature elastomers such as nitryl rubber or silicone or fluoroelastomers or polyacrylate or neoprene or polyurethane. These elements 26 are mounted by the respective attachment portions 28 in the cage 22. Their tang portions 30 circumferentially extend within respective openings 24.

As illustrated in Figures 1-5 and 6, cage 22 has a wide radial cross-sectional shape. This shape gives more support to the sprags 16 and eliminates the need to provide a cage having two concentric ring members as in the case of the prior art designs disclosed in the Japanese patent documents identified above. This shape also facilitates the mounting of metal or elastomeric energizing elements 26.

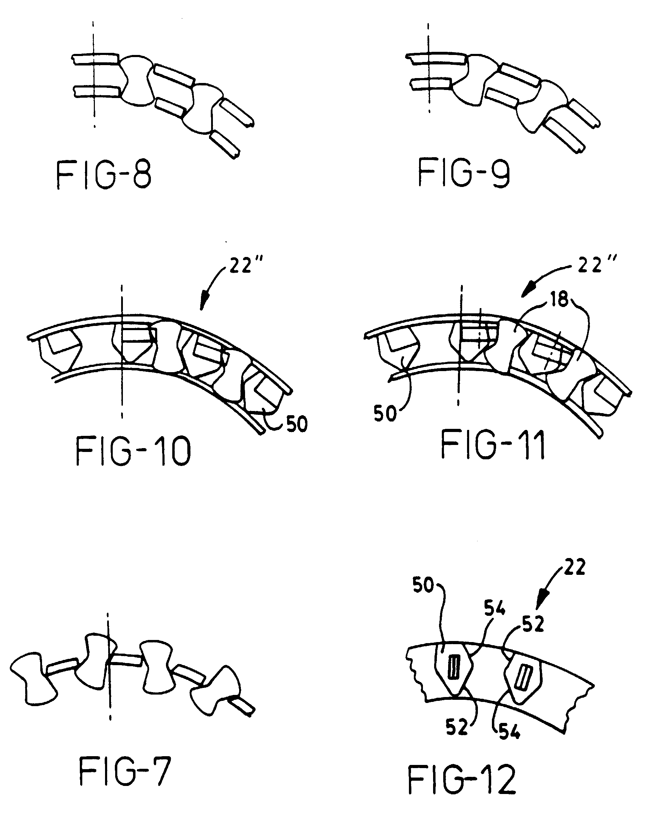

Figures 10-18 illustrate yet another embodiment of the cage 22'' wherein a cam member 50 extends into the openings 24 of the cage to provide support for the sprags 16 in their positions of engagement as well as in their free wheel/overrunning positions and all positions therebetween. As a comparison, Figures 7-9 illustrate prior art cage and sprag structures.

In Figure 7, a single cage design is illustrated. It can be seen that sprag control or support is minimal because the cage only contacts the sprags at one point, which is in the center of the sprag. In Figures 8 and 9 a typical double cage design is illustrated. In such an arrangement the two rings are relatively moveable and unable to support the sprags in their nonengaged positions.

In Figure 10 the sprags 16 are shown supported by cam members 50 in the freewheel or overrunning position. In Figure 11 sprags 16 are shown supported by cam members 50 in the engaged position. It becomes apparent then that the cam member 50 allows a combined cage to possess at least all the sprag control found in the double cage design.

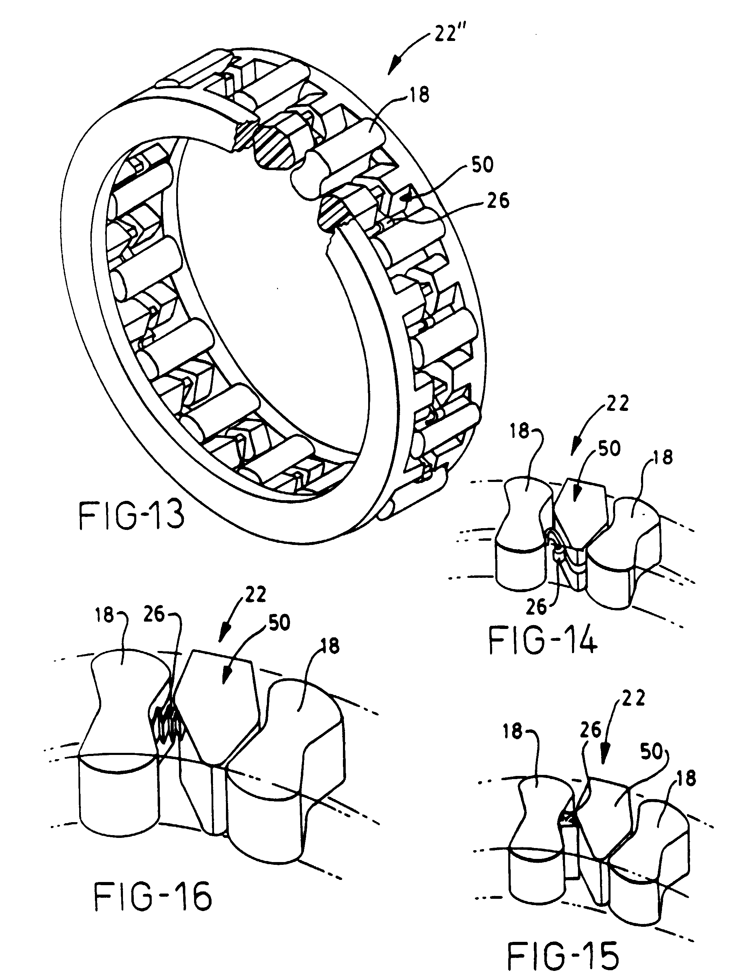

As shown in Figures 12 and 13, each pair of cam members includes engaged cam surface portions 52 and free wheel cam surface portions 54 that provide sprag 16 support along the body of the sprag. When such a cage 22 is inserted between a pair of clutch-races, the resultant clutch has been found to meet or exceed the performance of a conventional double cage clutch. It can be appreciated that while cam members 50 limit extreme angular positioning of the sprags 16, once the cam members position the sprags into engagement with respective inner and outer clutch races, that the cam members do not inhibit sprag/race cooperation.

As illustrated in Figure 13, cam members 50 extend axially and provide a sufficient surface to support sprags 16. Cam members 50 also eliminate latching, or pop out of the sprags 16 through the windows.

Cam members 50 can also provide a mount for the independent energizing spring elements 26. The combination of improved cage design and use of individual energizing elements serve to angle the sprags 16 in the engagement direction during the free wheel/overrunning mode of operation. The attachment of the spring elements 26 to the cam members 50 increases the total effectiveness of a one way clutch. The independent energizing elements 26, while providing forces to the sprags equivalent to the forces exerted by a band spring in a double cage clutch design, provide more opportunity for higher levels of automated assembly.

Figure 14 illustrates the use of a C-clip type spring independent energizing element 26.

Figure 15 illustrates the use of an elastomeric-type independent energizing element 26 as hereinabove described.

Figure 16 illustrates the use of a Z-spring type independent energizing element 26.

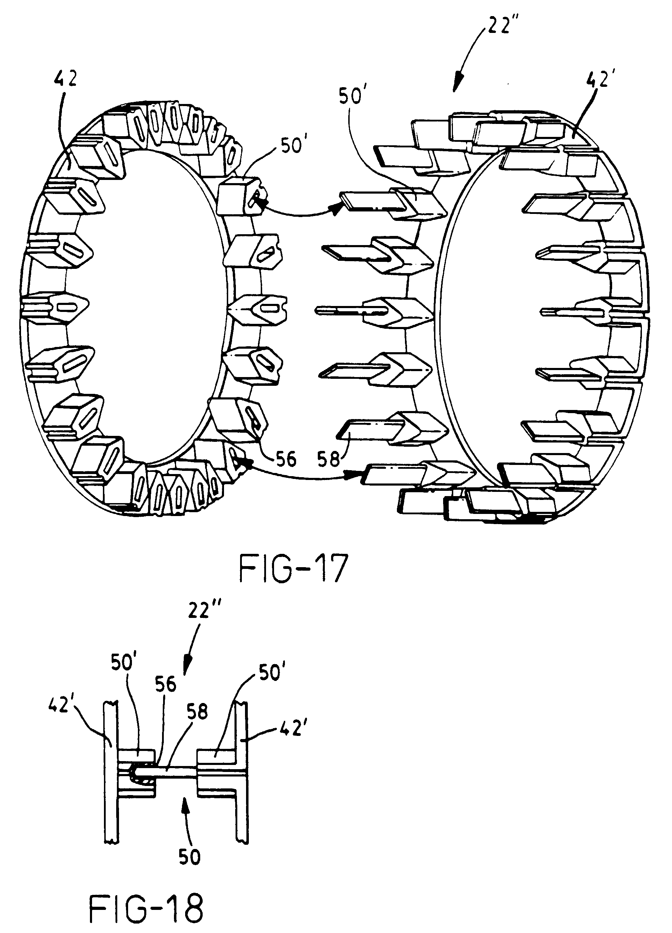

In Figure 17, cage 22'' is illustrated as a two piece construction. Each piece defines half of the cage and has a flange section 42' and an axially extending cam member portion 50'. At the distal ends of the cam member portions 50', there are provided mating connecting members 56, 58 which allow the two pieces to be connected together as shown in Figure 17. As illustrated, connected cam member portions 50' include a portion for mounting the energizing spring members 26 therein. This mounting portion 60 is configured for the type of energizing spring element 26 used.

The two piece construction facilitates automated assembly and allows the sprags 16 and energizing spring elements 26 to be mounted on one half of the cage 22" before the other half of the cage is connected to the first half. This type of assembly is preferred to a one piece construction for the benefit of assembling access for sprags and springs.

Preferably the two piece plastic cage 22" is of plastic construction. Each piece can be molded separately with axially drawn dies but they may be made also by other manufacturing techniques. Alternatively cage 22" can be of metal construction or of a combination of metal and plastic. The metal construction may include formed or powdered metal technology.

## Claims

1. A one-way sprag clutch comprising concentric inner (14) and outer (12) races and a sprag cage structure (10) located between the races (12, 14); the sprag cage structure (10) comprising an annular cage (22; 22") having axially extending circumferentially spaced cam members (50) which define therebetween circumferentially spaced windows (24), tiltable sprags (16) located one in each window (24), each sprag (16) having a radially inner clutch surface (20) and a radially outer clutch surface (18) engageable respectively with the inner (14) and outer (12) races, the sprags (16) each having a circumferential width at a location intermediate the inner (20) and outer (18) clutch surfaces thereof less than its circumferential width at locations adjacent the clutch surfaces (18, 20), cam surfaces (52, 54) on the cam members (50) on opposed sides of each of the sprags (16), the sprags (16) being engageable with the cam surfaces (52, 54) at the sprag locations adjacent the inner (20) and outer (18) clutch surfaces when the sprags (16) are tilted to a limiting angular position, and an energizing spring (26) for each of the sprags (16) secured to a respective cam member (50) and adapted to engage an adjacent sprag (16) at its intermediate location thereby to impart a continuous moment on the sprag (16) to maintain the clutch surfaces (18, 20) thereof in contact with the races (12, 14), characterized in that each window (24) has a generally hour-glass shape substantially constant shape in the radial direction of the cage (22; 22") with the radially outward region of the window (24) and the radially inward region of the window (24) both being wider in a circumferential direction than the radially intermediate region of the window (24), adjacent cam members (50) being engageable, at the radially intermediate region of the window (24) defined therebetween, with the intermediate relatively narrow location of the sprag (16) located in that window (24), adjacent cam members (50) each including a pair of said cam surfaces (52, 54), one such cam surface (50) of one cam member (50) lying circumferentially opposite one such cam surface (54) of the adjacent cam member (50), those circumferentially opposed cam surfaces (52, 54) continuously converging in a radially outward direction from the radially inward region of the window (24) to the radially intermediate region thereof, the other such cam surface (54) of said one cam member (50) lying circumferentially opposite the other such cam surface (52) of said adjacent cam member (50), those circumferentially opposed cam surfaces (54, 52) continuously diverging in a radially outward region of the window (24), the cam surfaces (52, 54) of each cam member intersecting with one another at said intermediate region of the window (24).

2. A one-way sprag clutch as claimed in claim 1, wherein said one cam surface (52) of said one cam member (50) lies diagonally opposite said other cam surface (52) of said adjacen cam member (50), and said one cam surface (54) of said one cam member (50) lies diagonally opposite said other cam surface (54) of said adjacent cam member (50), the pair of diagonally opposed cam surfaces (52) limiting tilting motion of the sprag (16) in the window (24) in a clutch engaging direction, and the pair of diagonally opposed cam surfaces (54) limiting opposite tilting motion of the sprag (16) in a clutch diengaging direction.

3. A one-way sprag clutch as claimed in claim 1 or 2, wherein the cam members (50) extend substantially radially between the inner (14) and outer (12) races, and the cam surfaces (52, 54) are substantially flat surfaces positioned at an angle to the radial axis of the cam members (50).

4. A one-way sprag clutch as claimed in any of the preceding claims, wherein the sprags (16) are each of generally hour-glass shape in the radial direction of the sprag (16).

5. A one-way sprag clutch as claimed in any of the preceding claims, wherein the cam members (50) are each formed on one circumferential side thereof with a spring pocket, one end of each spring (26) being positioned in the respective spring pocket.

6. A one-way sprag clutch as claimed in any of the preceding claims, wherein the cam members (50) eliminate latching, or "pop out" of the sprags (16) through the windows (24).

7. A one-way sprag clutch as claimed in any of the preceding claims, wherein the cage (22") includes two connectable cage pieces, each cage piece including a flange section (42') and an axially extending cam member portion (50') and means (56, 58) for mating the cage pieces together to form a one piece cage (22").

8. A one-way sprag clutch as claimed in any of the preceding claims, wherein the cage (22; 22") is comprised of high temperature engineered plastics such as polyetherimide, nylon or PES polyethersulfone.

9. A one-way sprag clutch as claimed in claim 8, wherein said high temperature engineered plastics are reinforced with carbon fibres or glass or clay or mica.

10. A one-way sprag clutch as claimed in any of claims 1 to 7, wherein the cage (22; 22") is comprised of metal material such as steel, aluminium or bronze.

11. A one-way sprag clutch as claimed in any of claims 1 to 7, wherein the cage (22; 22") is comprised of a combination of metal and plastic material.

12. A one-way sprag clutch as claimed in any of the preceding claims, wherein the energizing springs (26) comprise high temperature elastomers such as nitrile rubber or silicone of fluoroelastomers or polyacrylate or neoprene or polyurethane.

13. A one-way sprag clutch as claimed in any of the preceding claims, wherein the cage (22) has a cross section of a generally rectangular shape defined by spaced flanges (42) connected by the cam members (50).

## Patentansprüche

1. Klemmkörper-Einwegkupplung mit konzentrischen inneren (14) und äußeren (12) Laufbahnen und einer Klemmkörper-Käfiganordnung (10), die zwischen den Laufbahnen (12, 14) angeordnet sind, wobei die Klemmkörper-Käfiganordnung (10) ausfweist: einen ringförmigen Käfig (22; 22") mit axial verlaufenden, in Umfangsrichtung beabstandeten Nockengliedern (50), die zwischen sich in Umfangsrichtung beabstandete Fenster (24) bilden, schwenkbare Klemmkörper (16), von denen jeweils einer in jedem Fenster (24) angeordnet ist, wobei jeder Klemmkörper (16) mit einer radial inneren Kupplungsfläche (20) und einer radial äußeren Kupplungsfläche (18) versehen ist, die mit der inneren Laufbahn (14) bzw. der äußeren Laufbahn (12) in Anlage bringbar sind, wobei die Klemmkörper (16) jeweils eine Umfangsbreite an einer Stelle zwischen ihrer inneren Kupplungsfläche (20) und äußeren Kupplungsfläche (18) hat, die kleiner als ihre Umfangsbreite an Stellen benachbart zu den Kupplungsflächen (18, 20) ist, Nockenflächen (52, 54) an den Nokkengliedern (50) auf gegenüber liegenden Seiten jedes Klemmkörpers (16), wobei die Klemmkörper (16) in Anlage mit den Nockenflächen (52, 54) an den Klemmkörperstellen benachbart zu der inneren Kupplungsfläche (20) und der äußeren Kupplungsfläche (18) bringbar sind, wenn die Klemmkörper (16) in eine begrenzende Winkelstellung geschwenkt werden, und eine Andrückfeder (26) für jeden der Klemmkörper (16), die an einem entsprechenden Nockenglied (50) befestigt ist und an einem benachbarten Klemmkörper (16) an seiner dazwischen liegenden Stelle angreifen kann, um dadurch ein kontinuierliches Moment auf den Klemmkörper (16) auszuüben und dadurch die Kupplungsflächen (18, 20) in Kontakt mit den Laufbahnen (12, 14) zu halten, dadurch gekennzeichnet, daß jedes Fenster (24) eine ungefähre Sanduhrform, im wesentlichen konstant, in radialer Richtung des Käfigs (22; 22") hat, wobei der radial äußere Bereich des Fensters (24) und der radial innere Bereich des Fensters (24) beide in Umfangsrichtung breiter sind als der radial dazwischen liegende Bereich des Fensters (24), daß benachbarte Nockenglieder (50) an dem radial dazwischen liegenden Bereich des dazwischen gebildeten Fensters (24) in Anlage mit der dazwischen liegenden, relativ schmalen Stelle des in diesem Fenster (24) angeordneten Klemmkörpers (16) bringbar sind, daß benachbarte Nokkenglieder (50) jeweils zwei dieser Nockenflächen (52, 54) umfassen, wobei eine derartige Nockenfläche (50) eines Nockengliedes (50) einer derartigen Nockenfläche (54) des benachbarten Nockengliedes (50) in Umfangsrichtung gegenüber liegt, daß diese in Umfangsrichtung gegenüber liegenden Nockenflächen (52, 54) in radial auswärts verlaufender Richtung von dem radial inneren Bereich des Fensters (24) zu dem radial dazwischen liegenden Bereich kontinuierlich konvergieren, daß die andere derartige Nockenfläche (54) des besagten einen Nockengliedes (50) der anderen derartigen Nockenfläche (52) des besagten benachbarten Nockengliedes (50) in Umfangsrichtung gegenüber liegt, wobei diese in Umfangsrichtung gegenüber liegenden Nockenflächen (54, 52) in einem radial äußeren Bereich des Fensters (24) kontinuierlich divergieren, und daß sich die Nockenflächen (52, 54) jedes Nokkengliedes in dem dazwischen liegenden Bereich des Fensters (24) schneiden.

2. Klemmkörper-Einwegkupplung nach Anspruch 1, bei der die eine Nokkenfläche (52) des besagten einen Nockengliedes (50) der anderen Nockenfläche (52) des benachbarten Nockengliedes (50) diagonal gegenüber liegt, und daß die eine Nockenfläche (54) des besagten Nockengliedes (50) der anderen Nockenfläche (54) des benachbarten Nockengliedes (50) diagonal gegenüber liegt, wobei die beiden diagonal gegenüber liegenden Nockenflächen (52) die Schwenkbewegung des Klemmkörpers (16) in dem Fenster (24) in Kupplungseinrückstellung begrenzen und die beiden diagonal gegenüber liegenden Nockenflächen (54) die entgegengesetzte Schwenkbewegung des Klemmkörpers (16) in Kupplungsausrückrichtung begrenzen.

3. Klemmkörper-Einwegkupplung nach Anspruch 1 oder 2, bei der die Nokkenglieder (50) im wesentlichen radial zwischen der inneren Laufbahn (14) und der äußeren Laufbahn (12) verlaufen und die Nockenflächen (52, 54) im wesentlichen ebene Flächen sind, die unter einem Winkel zu der radialen Achse der Nockenglieder (50) angeordnet sind.

4. Klemmkörper-Einwegkupplung nach einem der vorhergehenden Ansprüche, bei der die Klemmkörper (16) in radialer Richtung des Klemmkörpers (16) jeweils ungefähr sanduhrförmig ausgebildet sind.

5. Klemmkörper-Einwegkupplung nach einem der vorhergehenden Ansprüche, bei der die Nockenglieder (50) jeweils auf einer Umfangsseite mit einer Federtasche versehen sind, wobei ein Ende jeder Feder (26) in der entsprechenden Federtasche angeordnet ist.

6. Klemmkörper-Einwegkupplung nach einem der vorhergehenden Ansprüche, bei der die Nockenglieder (50) ein Verriegeln bzw. "Herausspringen" der Klemmkörper (16) durch die Fenster (24) verhindern.

7. Klemmkörper-Einwegkupplung nach einem der vorhergehenden Ansprüche, bei der der Käfig (22") zwei verbindbare Käfigteile aufweist, von denen jedes Käfigteil einen Flanschabschnitt (42') und einen axial verlaufenden Nockengliedabschnitt (50') sowie Mittel (56, 58) zum Zusammensetzen der Käfigteile aufweist, um einen einstückigen Käfig (22") zu bilden.

8. Klemmkörper-Einwegkupplung nach einem der vorhergehenden Ansprüche, bei der der Käfig (22; 22") aus einem Hochtemperatur-Kunststoff wie z.B. Polyetherimid, Nylon oder PES-Polyethersulfon besteht.

9. Klemmkörper-Einwegkupplung nach Anspruch 8, bei der der Hochtemperatur-Kunststoff mit Kohlenstoff-Fasern oder Glas oder Lehm oder Glimmer verstärkt ist.

10. Klemmkörper-Einwegkupplung nach einem der Ansprüche 1 bis 7, bei der der Käfig (22; 22") aus einem metallischen Material wie z.B. Stahl, Aluminium oder Bronze besteht.

11. Klemmkörper-Einwegkupplung nach einem der Ansprüche 1 bis 7, bei der der Käfig (22, 22") aus einer Kombination aus metallischem Material und Kunststoff besteht.

12. Klemmkörper-Einwegkupplung nach einem der vorhergehenden Ansprüche, bei der die Andrückfedern (26) aus Hochtemperatur-Elastomeren wie z.B. Nitrilgummi oder einem Silicon der Fluorelastomeren oder Polyacrylat oder Neopren oder Polyurethan bestehen.

13. Klemmkörper-Einwegkupplung nach einem der vorhergehenden Ansprüche, bei der der Käfig (22) einen Querschnitt von ungefähr rechteckiger Form hat, die durch von den Nockengliedern (50) verbundenen beabstandeten Flanschen (42) gebildet wird.

## Revendications

1. Embrayage à galets unidirectionnel comprenant des chemins de roulement interne (14) et externe (12) concentriques et une structure de cage et de galets (10) placée entre les chemins de roulement (12, 14) ; la structure de cage et de galets (10) comprenant une cage annulaire (22 ; 22") comportant des éléments à came espacés circonférenciellement et s'étendant axialement (50) qui définissent entre ceux-ci des fenêtres circonférenciellement espacées (24), des galets inclinables (16) étant placés dans chaque fenêtre (24), chaque galet (16) comportant une surface d'embrayage radialement interne (20) et une surface d'embrayage radialement externe (18) pouvant être mise en prise respectivement avec les chemins de roulement interne (14) et externe (12), les galets (16) présentant chacun une largeur circonférencielle à un emplacement intermédiaire de ses surfaces d'embrayage interne (20) et externe (18) plus petite que sa largeur circonférencielle à des emplacements adjacents aux surfaces d'embrayage (18, 20), des surfaces de came (52, 54) sur les éléments à came (50) sur les côtés opposés de chacun des galets (16), les galets (16) pouvant être mis en prise avec les surfaces de came (52, 54) aux emplacements de galets adjacents aux surfaces d'embrayage interne (20) et externe (18) lorsque les galets (16) sont inclinés pour limiter une position angulaire, et un ressort de sollicitation (26) pour chacun des galets (16) fixé à un élément à came respectif (50) et conçu pour mettre en prise un galet adjacent (16) à sa position intermédiaire pour communiquer de ce fait un moment continu sur le galet (16) pour maintenir ses surfaces d'embrayage (18, 20) en contact avec les chemins de roulement (12, 14), caractérisé en ce que chaque fenêtre (24) présente une forme généralement en sablier sensiblement constante dans la direction radiale de la cage (22 ; 22") avec la région radialement vers l'extérieur de la fenêtre (24) et la région radialement vers l'intérieur de la fenêtre (24) étant toutes les deux plus large dans une direction circonférencielle que la région radialement intermédiaire de la fenêtre (24), les éléments à came adjacents (50) pouvant être mis en prise, au niveau de la région radialement intermédiaire de la fenêtre (24) définie entre ceux-ci, avec l'emplacement intermédiaire relativement étroit du galet (16) placé dans cette fenêtre (24), les éléments à came adjacents (50) incluant chacun une paire desdites surfaces de came (52, 54), une première dîtes ces surfaces de came (50) d'un élément à came se trouvant circonférenciellement opposée à une première surface de came (54) de l'élément à came adjacent (50), ces surfaces de came circonférenciellement opposées (52, 54) convergeant continuellement dans une direction radialement vers l'extérieur à partir de la région radialement vers l'intérieur de la fenêtre (24) à sa région radialement intermédiaire, l'autre de ces surfaces à came (54) dudit premier élément à came (50) se trouvant circonférenciellement opposé à l'autre de ces surfaces à came (52) dudit élément à came adjacent (50), ces surfaces de came circonférenciellement opposées (54, 52) divergeant continuellement dans une région radialement vers l'extérieur de la fenêtre (24), les surfaces de came (52, 54) de chaque élément à came se coupant mutuellement au niveau de ladite région intermédiaire de la fenêtre (24).

2. Embrayage à galets unidirectionnel selon la revendication 1, dans lequel ladite première surface de came (52) du premier élément à came (50) se trouve diagonalement opposée à ladite surface de came (52) dudit élément à came adjacent (50) et ladite première surface de came (54) dudit premier élément à came (50) se trouve diagonalement opposées à ladite autre surface de came (54) dudit élément à came (50), la paire des surfaces de came diagonalement opposée (52) limitant le mouvement d'inclinaison du galet (16) dans la fenêtre (54) dans une direction d'embrayage de l'embrayage, et la paire des surfaces de came diagonalement opposées (54) limitant le mouvement d'inclinaison opposée du galet (16) dans une direction de désembrayage de l'embrayage.

3. Embrayage à galets unidirectionnel selon la revendication 1 ou 2, dans lequel les éléments à came (50) s'étendent sensiblement radialement entre les chemins de roulement interne (14) et externe (12) et les surfaces de came (52, 54) sont des surfaces sensiblement plates positionnées à un certain angle par rapport à l'axe radial des éléments à came (50).

4. Embrayage à galets unidirectionnel selon l'une quelconque des revendications précédentes, dans lequel les galets (16) sont chacun d'une forme généralement en sablier dans la direction radiale du galet (16).

5. Embrayage à galets unidirectionnel selon l'une quelconque des revendications précédentes, dans lequel les éléments à came (50) sont chacun formés sur son premier côté circonférenciel avec une poche de ressort, une extrémité de chaque ressort (26) étant positionnée dans la poche de ressort respective.

6. Embrayage à galets unidirectionnel selon l'une quelconque des revendications précédentes, dans lequel les éléments à came (50) élimine le blocage ou la "sortie" des galets (16) à travers les fenêtres (24).

7. Embrayage à galets unidirectionnel selon l'une quelconque des revendications précédentes, dans lequel la cage (22") inclut deux pièce de cage connectables, chaque pièce de cage incluant une section de rebord (42') et une partie d'élément à came s'étendant axialement (50') et un moyen (56, 58) pour adapter des pièces à cage de la cage ensemble pour former une cage en une seule pièce (22").

8. Embrayage à galets unidirectionnel selon l'une quelconque des revendications précédentes, dans lequel la cage (22 ; 22") est constituée de plastiques traités à une température élevée tels que polyéthérimides, nylons ou polyéthersulfones PES.

9. Embrayage à galets unidirectionnel selon la revendication 8, dans lequel lesdits plastiques traités à température élevée sont renforcés avec des fibres de carbone ou du verre ou de l'argile ou du mica

10. Embrayage à galets unidirectionnel selon l'une quelconque des revendications 1 à 7, dans lequel la cage (22 ; 22") est constituée d'un matériau métallique tel que de l'acier, de l'aluminium ou du bronze.

11. Embrayage à galets unidirectionnel selon l'une quelconque des revendications 1 à 7, dans lequel la cage (22 ; 22") est constituée d'une combinaison de métal et de matière plastique.

12. Embrayage à galets unidirectionnel selon l'une quelconque des revendications précédentes, dans lequel les ressorts de sollicitation (26) comprennent des élastomères à température élevée tels que caoutchouc de nitrile ou silicone de fluorélastomères ou polyacrylate ou néoprène ou polyuréthanne.

13. Embrayage à galets unidirectionnel selon l'une quelconque des revendications précédentes, dans lequel la cage (22) présente une section transversale d'une forme généralement rectangulaire définie par des rebords séparés (42) raccordés par les éléments à came (50).
